# EUROPEAN PATENT APPLICATION

(11) **EP 4 307 729 A1**
(43) Date of publication of application: **17.01.2024**
(21) Application number: 22184704.9
(22) Date of filing: 13.07.2022
(51) Int. Cl.: H04W 4/40, H04W 4/46, H04W 64/00, H04W 76/14, H04W 84/18, H04W 16/22, H04W 24/10

(54) **METHOD FOR A NETWORK ENTITY FOR CONTROLLING A COMMUNICATION, METHOD FOR A FIRST COMMUNICATION DEVICE, METHOD FOR A SECOND COMMUNICATION DEVICE, APPARATUS, VEHICLE AND COMPUTER PROGRAM**

(71) Applicant: VOLKSWAGEN AG, 38440 Wolfsburg (DE); Seat, S.A., 08760 Martorell (ES)
(72) Inventor: MONTERO BAYO, Luca, 08011 Barcelona (ES); PFADLER, Andreas, 13357 Berlin (DE)
(74) Representative: 2SPL Patentanwälte PartG mbB

(57) **Abstract**

Embodiments relate to a method 100 for a network entity. The method 100 for the network entity is for controlling a communication between a first communication device and a second communication device. The method 100 comprises receiving 110 from the first communication device a space allocation non-compliance, SANC, message comprising information about a usage of a radiation boundary area by the second communication device, the radiation boundary area being assigned for usage by the first communication device. Further, the method 100 comprises determining 120 an interference between communication signals of the first and second communication devices in the radiation boundary area and transmitting 130 information about the determined interference to the second communication device.

## Description

The present disclosure relates to the field of wireless communication. Embodiments relate to a method for a network entity for controlling a communication, a method for a first communication device, a method for a second communication device, an apparatus, a vehicle and a computer program, more particularly, but not exclusively, to a concept for controlling a communication between a first communication device and a third communication device, e.g., to utilize a radiation boundary area for controlling a communication of the first communication device, e.g., with respect to an interferer (e.g., the second communication device).

The development of 5G has brought increased attention to the automotive industry as a vertical manufacturer expected to leverage the most advanced features of the new generation of wireless communications. Among the main novelties of 5G, a wide range of spectrum possibilities (currently licensed up to the 28 GHz band - the first-ever Millimeter wave band for mobile use), enhanced support for high mobility scenarios and new mechanisms to guarantee and predict the experienced Quality of Service (QoS), have been established as key functions to support an increasingly connected transportation ecosystem. Besides, the latest standard release (Rel. 16) has given support to Vehicle-to-Everything (V2X) communications with New Radio (NR) technology, allegedly allowing vehicles to make use of the same spectrum options, even for Vehicle-to-Vehicle (V2V) use cases.

Providing the NR support of V2X, vehicles are also capable of communicating at frequencies above 6 GHz. In 5G, these higher frequency bands are allocated at the mmWave range of the spectrum (30-300GHz). The use of higher frequency bands in communications implies propagating in a harsher channel, where the free-space path loss scales with (*f*²), and shading by obstacles and atmospheric effects (e.g., water vapor and oxygen absorption, or rain) take a non-negligible role. Services relying on higher frequency systems, with their inherently high channel-induced attenuation, might find challenging to deliver satisfactory QoS in some situations where signal power attenuation is increased, lowering the received Signal-to-Noise Ratio. As a result, 5G User Equipment (UE) is reliant on multi-antenna front ends to perform beamforming and focus the radiate power towards the intended transmitter/receiver. It is thus worth considering that vehicles may be equipped with an advanced multi-antenna system.

CN 109 660 935 A discloses an interference positioning method of a base station side array antenna system. The data transmission of a base station and a user are periodically closed, meanwhile interference information is received, a base station side interference direction is determined by using a DOA method. A user reports the received interference power to the base station, so that an interference location area and power are calculated according to the joint judgment of the base station and the interference information received by the user, by adoption of the method. The interference location area can be effectively positioned without adding an additional test device or performing manual investigation, thereby reducing the manpower and material resources.

WO 2020/146545 A1 discloses a method for achieving interference coordination for 5G flight communication. The method improves QoS by implementing interference coordination between nodes, wherein one of the nodes is optimized for flight communication.

GB 2543839 A discloses a method for configuring a wireless network comprising a plurality of nodes to mitigate effects of an external interference source. A subset of nodes of the plurality of nodes are configured to simultaneously participate in an external interference sampling process in which each node of the subset of nodes samples signals received by an antenna array of that node.

When using directive antennas instead of omnidirectional antennas, undesired radiation towards a wide region in (angular) space is minimized and thus interference exerted towards other users can be potentially reduced. This can enhance the rate of time and frequency resource reuse and increase the Quality of Service of the links. However, this paradigm requires increased knowledge by all nodes or at least one node (e.g., base station) that can intelligently manage these resources. As the radiation from nodes shifts from omnidirectional to beam-based, the footprint of the antenna patterns projected in space is a resource to plausible to work with, and it is thus worth considering that space itself might also be allocated in the scheduling strategies for future communications.

It is therefore a finding that a communication between a first communication device and a third communication device can be controlled by maintaining a communication in a radiation boundary area, which is used by the first communication device to communicate with the third communication device. This way, an interferer e.g., a second communication device, can be informed that a communication signal of the first communication may be interfered by a communication signal of its own. Thus, an interference between different communication devices may be reduced and/or a performance of a mobile communication system may be improved.

Examples provide a method for a network entity for controlling a communication between a first communication device and a third communication device. The method comprises receiving from the first communication device a space allocation non-compliance, SANC, message comprising information about a usage of a radiation boundary area by a second communication device, the radiation boundary area being assigned for usage by the first communication device. Further, the method comprises determining an interference between communication signals of the first and second communication devices in the radiation boundary area and transmitting information about the determined interference to the second communication device. Thus, the second communication device can be informed by the network entity about an interference between its own communication signal and the communication signal of the first communication signal in the radiation boundary area. This way, an undesired interference in the radiation boundary area can be reduced or even omitted and thus a communication between the first communication device and the third communication device can be controlled.

In an example, the method may further comprise obtaining a position of at least one of the first communication device or the second communication device. Further, determining the interference may be based on the obtained position. This way, the network entity can utilize the position of the first communication device and/or the second communication device, e.g., by considering assigned radiation boundary areas for the respective position of the first communication device and/or the second communication device.

In an example, the method may further comprise requesting a measurement report from another communication device in at least one of a surrounding of the radiation boundary area or a surrounding of the position of the second communication device. This way, the network entity can improve information about the communication signal, e.g., a signal intensity, a direction-of-arrival (DoA), and thus can improve the determination of the interference and/or the interferer.

In an example, the SANC message may comprise at least one of information about a position of the second communication device, information about a direction of arrival of the communication signal from the second communication device received at the first communication device or a radiation density of the communication signal of the second communication device received at the first communication device. This way, the network entity can receive parameters, which can be used to determine an interferer and/or to determine an interference caused by the communication signal of the second communication device.

In an example, the method may further comprise determining the position of the second communication device based on the SANC message. This way, the network entity can improve a position determination of the interferer, e.g., the second communication device, which may improve the determination of the interference between the communication signals of the first and the second communication device.

In an example, the method may further comprise receiving from the second communication device information about a reason of the usage of the radiation boundary area and determining a usage priority of the radiation boundary area for at least one of the first communication device or the second communication device. This way, the network entity can determine if the interferer, e.g., the second communication device, should be prioritized in using the radiation boundary area.

Examples relates to a method for a first communication device for improving a usage of a radiation boundary area. The method comprises detecting a communication signal of a second communication device in a radiation boundary area assigned for usage to the first communication device, the communication signal of the second communication device interfering with a communication signal of the first communication device. Further, the method comprises transmitting to a network entity a space allocation non-compliance, SANC, message comprising information about a usage of a radiation boundary area by the second communication device. This way, the first communication device can inform the network entity about an interference caused by the second communication device.

In an example, the method may further comprise detecting a direction of arrival of the communication signal of the second communication device and transmitting to the network entity information about the direction of arrival of the communication signal of the second communication device. This way, the first communication device can transmit parameters, which can be used to determine an interferer, to the network entity.

In an example, the SANC message may comprise at least one of information about a position of the second communication device, information about a direction of arrival of the communication signal from the second communication device received at the first communication device or a radiation density of the communication signal of the second communication device received at the first communication device. This way, the first communication device can transmit a parameter, which can be used to determine an interferer and/or to determine an interference caused by the communication signal of the second communication device, to the network entity.

Examples relates to a method for a second communication device for improving a usage of a radiation boundary area. The method comprises receiving from a network entity information about a determined interference between a communication signal of the second communication device and a communication signal of a first communication device in a radiation boundary area. Further, the method comprises effecting an adjustment of a communication of at least one of the first communication device or the second communication device based on the information about the determined interference. This way, the communication signal of the first and/or the second communication device can be adjusted, e.g., to reduce interference between both communication signals.

In an example, the method may further comprise transmitting to the network entity information about a reason of the usage of the radiation boundary area. This way, the network entity can receive information, which can be used to determine, e.g., a priority of the communication signal of the second communication device.

Examples further provide an apparatus, comprising one or more interfaces configured to communicate with a first communication device, a second communication device and/or a network entity. The apparatus further comprises processing circuitry configured to control the one or more interfaces and to perform the method for the network entity, the first communication device and/or the second communication device as described above.

Examples further provide a vehicle comprising the apparatus as described above.

Examples further relate to a computer program having a program code for performing the method described above, when the computer program is executed on a computer, a processor, or a programmable hardware component.

Some examples of apparatuses and/or methods will be described in the following by way of example only, and with reference to the accompanying figures, in which
Fig. 1 shows an example of a method for a network entity;
Fig. 2 shows an example of a method for a first communication device;
Fig. 3 shows an example of a method for a second communication device;
Fig. 4 shows a block diagram of a mobile communication system; and
Fig. 5 shows an example for a communication between a first communication device and a third communication device.

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, e.g., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

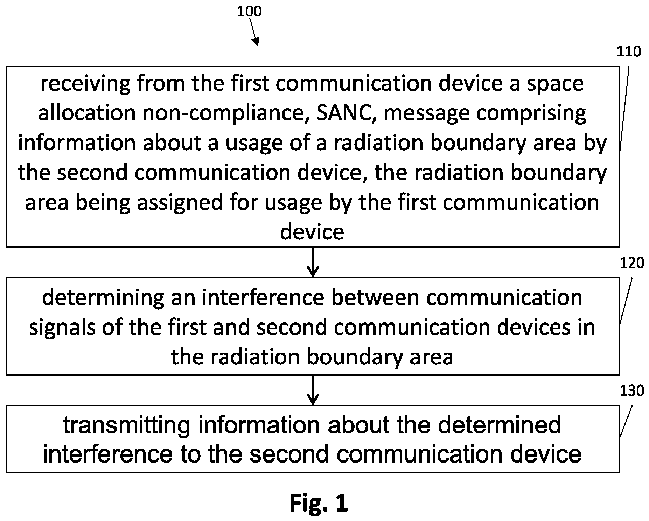

Fig. 1 shows an example of a method 100 for a network entity. The method 100 for the network entity is for controlling a communication between a first communication device and a third communication device. The method 100 comprises receiving 110 from the first communication device a space allocation non-compliance, SANC, message comprising information about a usage of a radiation boundary area by a second communication device, the radiation boundary area being assigned for usage by the first communication device. Further, the method 100 comprises determining 120 an interference between communication signals of the first and second communication devices in the radiation boundary area and transmitting 130 information about the determined interference to the second communication device. This way, the network entity can be informed by the first communication device about an interferer, e.g., the second communication device, of the first communication device. Since the interference my be undesired, the network entity can perform measures for controlling the communication between the first communication device and the third communication device, e.g., by informing the second communication device about the interference caused. Thus, interfering communication occurring between the first communication device and the second communication device can be reduced or forbidden, e.g., by forbidding the second communication device to use the radiation boundary area with the same resource as the first communication device. For example, the method 100 may be for improving a communication between the first communication and the third communication device by reducing interference with a communication signal of the second communication device.

For example, the network entity may be responsible to assign a spatial allocation, e.g., a radiation boundary area to each communication device in its own coverage area and/or transmission resources (e.g., belonging to a transmission parameter), such like frequency, time, radiation density for the radiation boundary area. However, the network entity may be not capable to monitor a correct use of the assigned spatial resource and/or transmission resource. Thus, the network entity can receive information about a non-assigned usage of a spatial allocation and/or transmission resources from the first communication device. This way, the network entity can be enabled to maintain the resources of its own coverage area in an improved way, especially to minimize interference between different communication devices.

The first/second/third communication device may communicate in a mobile communication system with the network entity, e.g., a base station. For example, the first/second/third communication device and the network entity may communicate in/via a mobile communication system. The mobile communication system may comprise a plurality of transmission points and/or base stations operable to communicate radio signals with the first/second/third communication device. In an example, the mobile communication system may comprise the first/second/third communication device and the network entity.

A network entity, e.g., the network entity, can be located in the fixed or stationary part of the network or system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device. Such a radio signal may comply with radio signals as, for example, standardized by 3GPP or, generally, in line with one or more of the above listed systems. Thus, a network entity may correspond to a NodeB, an eNodeB, a BTS, an access point, etc.

The mobile communication system may be cellular. The term cell refers to a coverage area of radio services provided by a transmission point, a remote unit, a remote head, a remote radio head, communication device, network entity or a NodeB, an eNodeB, respectively. The terms cell and base station may be used synonymously. A wireless communication device, e.g., the first/second/third communication device, can be registered or associated with at least one cell (e.g., the network entity), e.g., it can be associated to a cell such that data can be exchanged between the network and the mobile in the coverage area of the associated cell using a dedicated channel or connection.

In general, the first/second/third communication device may be a device that is capable of communicating wirelessly. In particular, however, the first/second/third communication device may be a mobile communication device, e.g., a communication device that is suitable for being carried around by a user. For example, the first/second/third communication device may be a User Terminal (UT) or User Equipment (UE) within the meaning of the respective communication standards being used for mobile communication. For example, the first/second/third communication device may be a mobile phone, such as a smartphone, or another type of mobile communication device, such as a smartwatch, a laptop computer, a tablet computer, or autonomous augmented-reality glasses. For example, the first/second/third communication device and the network entity may be configured to communicate in a cellular mobile communication system. Accordingly the first/second/third communication device and the network entity may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). For example, the first/second/third communication device and the network entity may be configured to communicate in a mobile communication system / cellular mobile communication system. In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In addition the first/second/third communication device/network entity may be suitable for, or configured to, communicating/communicate via non-cellular communication systems, e.g., via a device-to-device vehicular communication system, e.g., according to the IEEE 802.11p standard (Institute of Electrical and Electronics Engineers standard 802.11p for vehicular communication) or via a wireless local area network (e.g., according to IEEE 802.11a, IEEE 802.11b, IEEE 802.11g, IEEE 802.11n, IEEE 802.11ac or IEEE 802.11ax, also known as Wi-Fi 1 through Wi-Fi 6(E)). In particular, the first/second/third communication device and the network entity may be suitable for, or configured to, communicating/communicate in the frequency band between 5 GHz and 7.1 GHz, which covers communication in the 5 GHz band (for WiFi in the 5 GHz band), 5.9 GHz band (for vehicular communication according to the 802.11p standard) and between 5.9 GHz and 7.1 GHz (for WiFi in the 6 GHz band).

A connection between the first/second/third communication device and the network entity and/or the first communication device and the second communication device may be a wireless connection, e.g., a mmWave-based connection over the mobile communication system (e.g., using carrier frequencies of at least 20 GHz) or may be performed at lower carrier frequencies, e.g., using carrier frequencies of at most 7.5 GHz. For example, the wireless connection between the first/second/third communication device and the network entity may be initiated using the protocols of the mobile communication system, or using a short-range communication system, such as via a wireless local area network outlined above.

As is evident from the above example, while the communication between first/second/third communication device and network entity and/or between first communication device, second communication device and third communication device occurs via the mobile communication system, additional communication and/or alternatively communication (e.g., the first, the second and/or the third communication device may be a vehicle or may be comprised by a vehicle) between the communication device and the network entity may occur via a vehicular communication system. Such communication may be carried out directly, e.g., by means of Device-to-Device (D2D) communication. Such communication may be carried out using the specifications of the vehicular communication system. An example of D2D is direct communication between vehicles, also referred to as Vehicle-to-Vehicle communication (V2V) or Vehicle-to-Everything (V2X), car-to-car, Dedicated Short Range Communication (DSRC), respectively. Technologies enabling such D2D-communication include 802.11p, 3GPP systems (4G, 5G, NR and beyond), etc.

The radiation boundary area may be a space in the environment which is used for communication between communication devices. For example, the radiation boundary area may be assigned to a specific communication device, e.g., the first communication device for transmitting and/or receiving a communication signal to/from a third communication device.

For example, a radiation energy density caused by the first communication device may be outside the radiation boundary area below a threshold, e.g., below a maximal allowed background radiation energy density which does not influence the communication of other communication devices outside the radiation boundary area. For example, a radiation energy density of a transmission of the first communication device for communication with another communication device outside the radiation boundary area can be neglected.

Receiving 110 the SANC message can be performed by any suitable message, e.g., by a broadcast message, groupcast message or unicast message. Thus, the information about the SANC can be transmitted in a desired way, e.g., using a broadcast message to transmit the information about the SANC to the network entity. For example, if the network entity is a vehicle or infrastructure (such like a traffic light, etc.) and the first communication device is another vehicle the information about the SANC may be transmitted via V2X communication.

Determining 120 the interference between the communication signals may be performed by a processing unit of the network entity. For example, the network entity may determine the interference of the communication signals of the first and the second communication device based on known information about a usage of a radiation boundary area. For example, the network entity may maintain the radiation boundary area, e.g., a resource allocation for the radiation boundary area. Thus, the network entity may have information about a usage of the radiation boundary area by the first communication device and the second communication device.

Optionally, the network entity may determine 120 the interference based on information received from the first communication device. For example, the network entity may receive information about a position of the second communication device. Thus, the network entity can determine the interferer in an improved way. For example, the network entity may receive information about an intensity of the communication signal of the second communication device from the first communication device and may use this information for determining 120 the interference. This way, the determination of the interference can also be improved.

Transmitting 130 the information about the determined interference may be performed by any suitable message, e.g., by a groupcast message or unicast message. For example, the information may be transmitted 130 by use of a SANC response (SANCR) message. For example, the SANCR message may only comprise information that the second communication device was reported as interferer. This way, the second communication device can be informed by the network entity in an eased way, that it negatively effects a communication of another communication device, e.g., the first communication device or the third communication device.

Optionally or alternatively, the SANCR may comprise information about the interference between the communication signals of the first and the second communication device, a request for an authorization of the use of the radiation boundary area, information about an interfered another communication device, e.g. the first communication device, information about resource which could be used for usage of the radiation boundary area by the second communication device, etc. This way, the network entity can inform the second communication device about required measures and/or can request required information from the second communication device to response to the first communication device, e.g., to purpose measures to the first communication device.

In an example, the method 100 may further comprise obtaining a position of at least one of the first communication device or the second communication device. Further, determining the interference may be based on the obtained position. For example, the network entity may receive a position of the second communication device via a SANC received from the first communication device and thus can determine a communication signal of the second communication signal. Since the network entity may know with which other communication device the second communication device communicates and/or which resource, e.g., wavelength, intensity, time, etc., may be used by the second communication device, a determination of the interference can be eased and/or improved.

For example, the network entity may receive information about the position of the first communication device and thus can determine a direction of departure of a communication signal of the first communication signal (since the network entity may know with which other communication device the first communication device may want to communicate). This way, a determination of the position of the interferer can be improved.

In an example, the method 100 may further comprise requesting a measurement report from another communication device in at least one of a surrounding of the radiation boundary area or a surrounding of the position of the second communication device. For example, the network entity may know the position of the first communication device and may request the measurement report from the other communication device, e.g., to improve information about the communication signal of the interferer, e.g., the second communication device. This way, the determination 120 of the interference can be improved, since the network entity may receive improved information about the communication signal of the interferer.

In an example, the SANC message may comprise at least one of information about a position of the second communication device, information about a direction of arrival of the communication signal from the second communication device received at the first communication device or a radiation density of the communication signal of the second communication device received at the first communication device. This way, the first communication device can provide information to the network entity, which may improve the determination 120 of the interference. For example, based on the DoA the network entity can determine a direction of the interferer. For example, based on the radiation density the interference can be determined 120 in an improved way, since a signal intensity of the communication signal of the interferer may be known.

In an example, the method may further comprise determining the position of the second communication device based on the SANC message. For example, the position of the interferer, e.g., the second communication device, may be determined based on the DoA of the communication signal of the second communication device. Thus, the determination of the interference can be increased based on the information received from the first communication device.

In an example, the method may further comprise receiving from the second communication device information about a reason of the usage of the radiation boundary area and determining a usage priority of the radiation boundary area for at least one of the first communication device or the second communication device. For example, the second communication device may have a reason for using the radiation boundary area, e.g., an owner of the second communication device may have paid to use the radiation boundary area. This way, the second communication device can inform the network entity about the reason for usage. Thus, the network entity may reassign resources of the radiation boundary area, such that the second communication device can use the radiation boundary area. For example, the network entity may inform the first communication device, that it has to stop its communication in the radiation boundary area, since the second communication device may be prioritized.

For example, the radiation boundary area may be based on a structured grid, dividing a space, e.g., a coverage area of the network entity, into a plurality of tiles. Each tile of the structured grid can represent a radiation boundary area. Alternatively, a plurality of tiles of the structured grid can represent a radiation boundary area. For example, the structured grid can be hexagonal, triangular (geodesic grid), rectangular, or any shape that can uniformly fill the space. For example, a shape of the radiation boundary area may depend on an antenna capability of the first communication device.

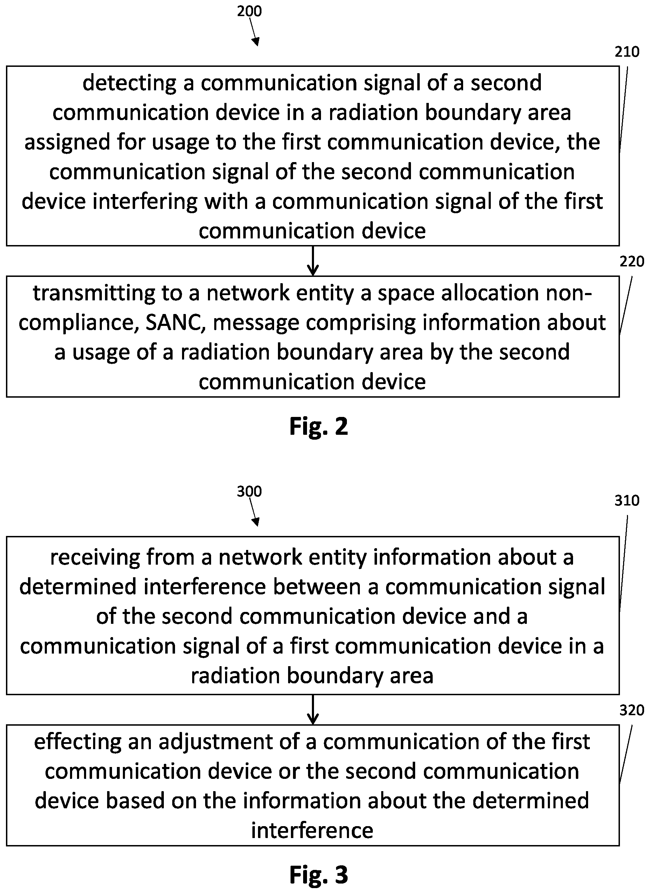

More details and aspects are mentioned in connection with the embodiments described above and/or below. The example shown in Fig. 1 may comprise one or more optional additional features corresponding to one or more aspects mentioned in connection with the proposed concept or one or more examples described below (e.g., Fig. 2 - 5).

Fig. 2 shows an example of a method 200 for a first communication device. The method 200 for the first communication device is for improving a usage of a radiation boundary area. The method 200 comprises detecting 210 a communication signal of a second communication device in a radiation boundary area assigned for usage to the first communication device, the communication signal of the second communication device interfering with a communication signal of the first communication device. Further, the method 200 comprises transmitting 220 to a network entity a space allocation non-compliance, SANC, message comprising information about a usage of a radiation boundary area by the second communication device.

This way, the first communication device can inform the network entity about an interferer of its own communication signal.

For example, the communication signal of the interferer may interfere with a communication signal received from another communication device, e.g., a third communication device, at the first communication device. For this case the first communication device may receive the interfering communication signal from the interferer, which may decrease an intensity of the received communication signal from the other communication device. For example, the first communication device may receive a decreased communication signal intensity from the third communication device due to the communication signal of the interferer, e.g., a second communication device.

For example, the first communication device may determine that an interferer, e.g., the second communication device, also radiates a communication signal in the same direction as the first communication device using the same radiation boundary area, which may affect receiving the communication signal from the first communication device at the third communication device. Thus, the first communication device can transmit information about the interferer to the network entity, without being directly affected in receiving a communication signal from the third communication device.

The first communication device may communicate with a network entity as described above, e.g., with reference to Fig. 1 (e.g., the first communication device may be a counterpart to the network entity described with reference to Fig. 1). For example, the first communication device may be UE, a vehicle, etc.

In an example, the method 200 may further comprise detecting a direction of arrival of the communication signal of the second communication device and transmitting to the network entity information about the direction of arrival of the communication signal of the second communication device. This way, the first communication device can inform the network entity about a position or an area of/in which the interferer is positioned.

In an example, the SANC message may comprise at least one of information about a position of the second communication device, information about a direction of arrival of the communication signal from the second communication device received at the first communication device or a radiation density of the communication signal of the second communication device received at the first communication device. This way, the first communication device can transmit parameters, which can be used to determine an interferer and/or to determine an interference caused by the communication signal of the second communication device, to the network entity.

More details and aspects are mentioned in connection with the embodiments described above and/or below. The example shown in Fig. 2 may comprise one or more optional additional features corresponding to one or more aspects mentioned in connection with the proposed concept or one or more examples described above (Fig. 1) and/or below (e.g., Fig. 3 -5).

Fig. 3 shows an example of a method 300 for a second communication device. The method 300 is for improving a usage of a radiation boundary area. The method 300 comprises receiving 310 from a network entity information about a determined interference between a communication signal of the second communication device and a communication signal of a first communication device in a radiation boundary area. Further, the method 300 comprises effecting 320 an adjustment of a communication of at least one of the first communication device or the second communication device based on the information about the determined interference. For example, the second communication device may be an interferer of the first communication device described above, e.g., with respect to Fig. 2. Thus, the second communication device may be reported by the first communication device using a SANC message to the network entity as described above, e.g., with reference to Fig. 1. By effecting the adjustment of the communication for the first and/or the second communication device the interference between the communication signals of the first and the second communication device can be reduced or even omitted. Thus, a communication between the fist communication device and the third communication device can be controlled and/or improved.

In an example, the method 300 may further comprise transmitting to the network entity information about a reason of the usage of the radiation boundary area. For example, a user of the second communication device may have paid to use a service instantly and thus the second communication device may be allowed to use the radiation boundary area. However, there may be a delay in informing the network entity about this fact, thus the first communication device may report the second communication device as interferer. Thus, the second communication device may inform the network entity about the purchased service. This may enable the network entity to reassign network resources for the radiation boundary area, e.g., to reassign resources from the first communication device to the second communication device. Further, the network entity may inform the first communication device about this reassignment. Thus, based on the SANC message of the first communication the network entity may either adjust a radiation characteristic of the first communication device, the second communication device or both.

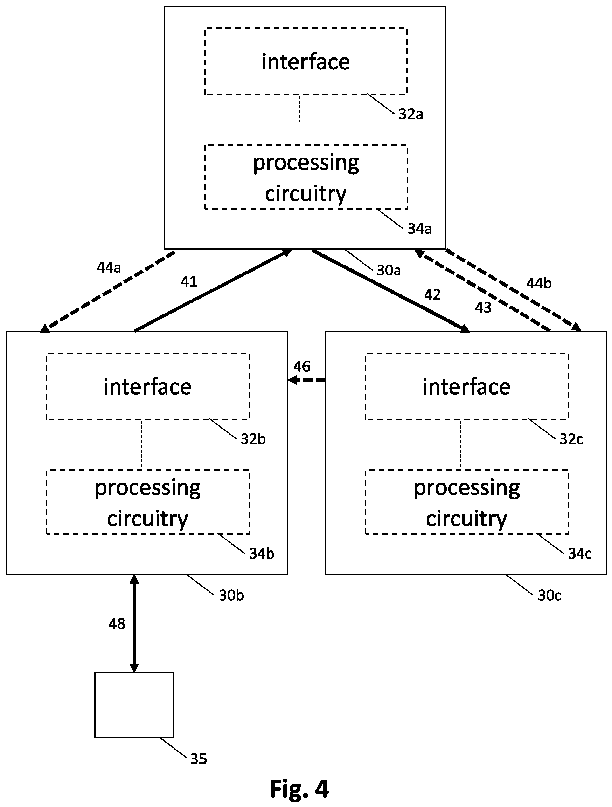

More details and aspects are mentioned in connection with the embodiments described above and/or below. The example shown in Fig. 3 may comprise one or more optional additional features corresponding to one or more aspects mentioned in connection with the proposed concept or one or more examples described above (Fig. 1 - 2) and/or below (e.g., Fig. 4-5).

Fig. 4 shows a block diagram of a mobile communication system. The mobile communication system comprises three apparatuses 30a, 30b, 30c. Each apparatus 30a, 30b, 30c comprises one or more interfaces 32a, 32b, 32c configured to communicate with a first communication device 30b, a second communication device 30c and/or network entity 30a. Each apparatus 30a, 30b, 30c further comprises processing circuitry 34a, 34b, 34c configured to control the one or more interfaces and to perform the method for the network entity 30a as described above (e.g., described with reference to Fig.1), the method for the first communication device 30b as described above (e.g., described with reference to Fig. 2) and/or the method for the second communication device 30c as described above (e.g., described with reference to Fig. 3).

The network entity 30a may be communicatively coupled to the first communication device 30b and the second communication device 30c. The network entity 30a may receive 41 from the first communication device 30b a SANC message, which may inform the network entity 30a about an interferer 30c of the first communication device 30b, interfering the communication signal 48 of the first communication device with a communication signal 46. For example, the first communication device 30b may communicate 48 with a third communication device 35, which could be interfered by the communication signal 46 of the second communication device 30c.

The network entity 30a may determine an interference and may transmit 42 information about the determined interference to the second network entity 30c. Optionally, the second communication device 30c may transmit 43 a message to inform the network entity 30a about a reason for usage of the radiation boundary area to the network entity 30a. Further optionally, the network entity 30a may transmit 44a, 44b a message to adjust a radiation characteristic to the first communication device 30b and/or the second communication device 30c. For example, the network entity 30a may reduce allocated resources for either one (the first communication device or the second communication device) or both communication devices.

This way, the interference between the communication signal 46 and the communication signal 48 can be reduced or even omitted.

For example, the apparatus 30b, 30c (and/or also 30a) can be comprised by a vehicle. For example, the vehicle may be a land vehicle, such a road vehicle, a car, an automobile, an off-road vehicle, a motor vehicle, a bus, a robo-taxi, a van, a truck or a lorry. Alternatively, the vehicle may be any other type of vehicle, such as a train, a subway train, a boat or a ship. For example, the proposed concept may be applied to public transportation (trains, bus) and future means of mobility (e.g., robo-taxis).

As shown in Fig. 4 the respective one or more interfaces 32a, 32b, 32c are coupled to the respective processing circuitry 34a, 34b, 34c at the apparatus 30a, 30b, 30c. In examples the processing circuitry 34a, 34b, 34c may be implemented using one or more processing units, one or more processing devices, any means for processing, such as a processor, a computer or a programmable hardware component being operable with accordingly adapted software. Similar, the described functions of the processing circuitry 34a, 34b, 34c may as well be implemented in software, which is then executed on one or more programmable hardware components. Such hardware components may comprise a general-purpose processor, a Digital Signal Processor (DSP), a micro-controller, etc. The processing circuitry 34a, 34b, 34c is capable of controlling the interface 32a, 32b, 32c, so that any data transfer that occurs over the interface and/or any interaction in which the interface may be involved may be controlled by the processing circuitry 34a, 34b, 34c. For example, the apparatus 30a, 30b, 30c can be comprised by a vehicle. For example, the vehicle may be a land vehicle, such a road vehicle, a car, an automobile, an off-road vehicle, a motor vehicle, a bus, a robo-taxi, a van, a truck or a lorry. Alternatively, the vehicle may be any other type of vehicle, such as a train, a subway train, a boat or a ship. For example, the proposed concept may be applied to public transportation (trains, bus) and future means of mobility (e.g., robo-taxis).

In an embodiment the apparatus 30a, 30b, 30c may comprise a memory and at least one processing circuitry 34a, 34b, 34c operably coupled to the memory and configured to perform the below mentioned method.

In examples the one or more interfaces 32a, 32b, 32c may correspond to any means for obtaining, receiving, transmitting or providing analog or digital signals or information, e.g., any connector, contact, pin, register, input port, output port, conductor, lane, etc. which allows providing or obtaining a signal or information. An interface may be wireless or wireline and it may be configured to communicate, e.g., transmit or receive signals, information with further internal or external components. The one or more interfaces 32a, 32b, 32c may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

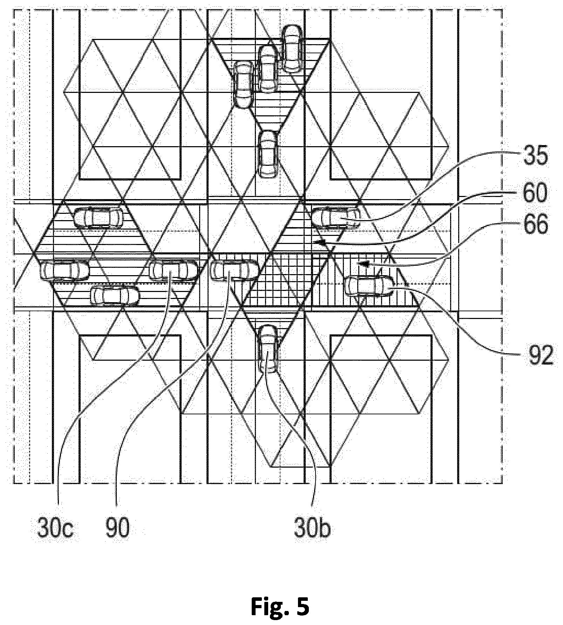

More details and aspects are mentioned in connection with the embodiments described above and/or below. The example shown in Fig. 4 may comprise one or more optional additional features corresponding to one or more aspects mentioned in connection with the proposed concept or one or more examples described above (Fig. 1 - 3) and/or below (e.g., Fig. 5).

Fig. 5 shows an example for a communication between a first communication device 90 and a third communication device 92. As can be seen in Fig. 5 a spatial allocation of two different time-frequency resources (vertical hatching, horizontal hatching) is used to assign resources to the plurality of communication devices 30b, 30c, 35, 90, 92.

A controlling base station, e.g., the network entity as described with reference to Fig. 1, may be responsible for determining the radiation boundary areas 60, 66 (see the connected hatched triangles). For example, a radiation boundary area can be only one tile, or a plurality of tiles as shown for the radiation boundary areas 60, 66. After an assignment of transmission resources, e.g., a radiation boundary area, a frequency, a time, a radiation density, etc., to each communication device 30b, 30c, 35, 90, 92 the base station may not recognize a change in the use of the radiation boundary area, caused by a communication device 30b, 30c, 35, 90, 92. Thus, the base station may be not capable to detect if a communication device 30b, 30c, 35, 90, 92 does use a not assigned spatial allocation constraint, e.g., a radiation boundary area, and/or another resource constraint, e.g., a frequency, a time, a radiation density, etc.

For example, as can be seen in Fig. 5, the communication devices 30b, 30c, 35 may use the same Time-Frequency (TF) resource with different space allocations 60 (vertical hatched space allocations). The communication devices 90, 92 may have a different TF resource with a different space allocation 66.

The second communication device 30c may not comply with its space allocation and/or TF resource, as its communication signal may excess a radiation boundary in the radiation boundary area 60. This may cause an interference with the communication signal between the second 30b and a third communication device 35, which may decrease the communication between both communication devices 30b, 35.

Since the controlling base station may not recognized this lack of conformity of usage of the radiation boundary area the first communication device 30b may inform the controlling base station about this fact, e.g., by transmitting a SANC. For example, the first communication device 30b may perform a SANC detection to detect unwanted interference in its assigned radiation boundary area and/or TF resource.

For example the first communication device 30b may be capable to determine the DoA of the communication signal of the second communication device 30c. Thus, the first communication device could transmit information about the DoA to the controlling base station, e.g., via a SANC message. Alternatively, the first communication device 30b may be not capable to determine the DoA.

The first communication device may transmit a SANC message to the controlling base station. The SANC message may comprise at least information that an interferer was detected for a specific allocated TF resource. Optionally, the SANC message may comprise a DoA (if detected), a measured radiation density, etc.

The controlling base station may initiate an identification of the misbehaving communication device 30c. Further, the controlling base station may determine an interference caused by the misbehaving communication device 30c.

To identify the misbehaving communication device 30c the controlling base station may request a measurement report from another communication device in the area around the reported DoA, e.g., from the communication device 90. This might include only communication devices between the radiation boundary areas using the same TF resource. Optionally or alternatively, the controlling base station may request a measurement report from communication devices located within a certain area. For example, the certain area may be given by a radius calculated based on the reported radiation density of the second communication device 30c.

Further, the controlling base station may be able to estimate the location and identify the communication device involved with the SANC message, e.g., the interferer who caused the SANC message. To reduce the interference the controlling base station may inform the interferer, e.g., the second communication device 30c about the SANC message caused by the second communication device 30c. This way, the second communication device can adjust a radiation characteristic, e.g., by adjusting an antenna setting to reduce the interference.

More details and aspects are mentioned in connection with the embodiments described above. The example shown in Fig. 5 may comprise one or more optional additional features corresponding to one or more aspects mentioned in connection with the proposed concept or one or more examples described above (Fig. 1 - 4).

The aspects and features described in relation to a particular one of the previous examples may also be combined with one or more of the further examples to replace an identical or similar feature of that further example or to additionally introduce the features into the further example.

Examples may be compliant to or even comprised in certain standard specifications, such as those specified by the 3GPP. Configuration information may for example be communicated using signaling radio bearers, e.g., by means of Radio Resource Control (RRC) messages, which are, for example, specified in the *.331 series of 3GPP as layer 3 control plane messages. For example, physical layer specification, e.g., by means of Doppler Delay Resolutions and other physical layer specifications may also be affected by present embodiments, e.g., *.201, *.211, *.212, *.213, *.214, *.216 series in the 3GPP specifications.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### List of reference signs

30a network entity
32a interface
34a processing circuitry
30b first communication device
32b interface
34b processing circuitry
30c second communication device
32c interface
34c processing circuitry
35 third communication device
41 transmit a SANC message
42 transmit information about a determined interference
43 receive information about a reason for usage
44a transmit information about an adjustment
44b transmit information about an adjustment
46 interfering communication signal
48 communication between first and third communication device
90 communication device
92 communication device
100 method for a network entity
110 receiving from the first communication device a space allocation non-compliance
120 determining an interference
130 transmitting information about the determined interference
140 transmitting information about the allocated radiation boundary area
200 method for a first communication device
210 detecting a communication signal of a second communication device
220 transmitting to a network entity a space allocation non-compliance
300 method for a second communication device
310 receiving from a network entity information about a determined interference
320 effecting an adjustment of a communication

## Claims

1. A method (100) for a network entity for controlling a communication between a first communication device and a third communication device, comprising:
receiving (110) from the first communication device a space allocation non-compliance, SANC, message comprising information about a usage of a radiation boundary area by a second communication device, the radiation boundary area being assigned for usage by the first communication device;
determining (120) an interference between communication signals of the first and second communication devices in the radiation boundary area; and
transmitting (130) information about the determined interference to the second communication device.

2. The method (100) according to claim 1, further comprising
obtaining a position of at least one of the first communication device or the second communication device, and wherein
determining the interference is based on the obtained position.

3. The method (100) according to claim 2, further comprising
requesting a measurement report from another communication device in at least one of a surrounding of the radiation boundary area or a surrounding of the position of the second communication device.

4. The method (100) according to any of the preceding claims, wherein
the SANC message comprises at least one of information about a position of the second communication device, information about a direction of arrival of the communication signal from the second communication device received at the first communication device or a radiation density of the communication signal of the second communication device received at the first communication device.

5. The method (100) according to claim 4, further comprising
determining the position of the second communication device based on the SANC message.

6. The method (100) according to any of the preceding claims, further comprising
receiving from the second communication device information about a reason of the usage of the radiation boundary area; and
determining a usage priority of the radiation boundary area for at least one of the first communication device or the second communication device.

7. The method (100) according to claim 6, further comprising
transmitting information about the usage priority to at least one of the first communication device or the second communication device.

8. A method (200) for a first communication device for improving a usage of a radiation boundary area, comprising:
detecting (220) a communication signal of a second communication device in a radiation boundary area assigned for usage to the first communication device, the communication signal of the second communication device interfering with a communication signal of the first communication device; and
transmitting (220) to a network entity a space allocation non-compliance, SANC, message comprising information about a usage of a radiation boundary area by the second communication device.

9. The method (200) according to claim 8, further comprising:
detecting a direction of arrival of the communication signal of the second communication device; and
transmitting to the network entity information about the direction of arrival of the communication signal of the second communication device.

10. The method (200) according to any of the claims 8-9, wherein
the SANC message comprises at least one of information about a position of the second communication device, information about a direction of arrival of the communication signal from the second communication device received at the first communication device or a radiation density of the communication signal of the second communication device received at the first communication device.

11. A method (300) for a second communication device for improving a usage of a radiation boundary area, comprising:
receiving (310) from a network entity information about a determined interference between a communication signal of the second communication device and a communication signal of a first communication device in a radiation boundary area; and
effecting (320) an adjustment of a communication of the first communication device or the second communication device based on the information about the determined interference.

12. The method (300) according to claim 11, further comprising
transmitting to the network entity information about a reason of the usage of the radiation boundary area.

13. An apparatus (30a; 30b; 30c), comprising:
one or more interfaces (32a; 32a; 32c) configured to communicate with a first communication device, a second communication device and/or a network entity; and
processing circuitry (34a; 34b; 34c) configured to control the one or more interfaces and to:
perform the method (100; 200; 300) according to any of claims 1 - 12.

14. A vehicle comprising the apparatus (30a; 30b; 30c) according to claim 13.

15. A computer program having a program code for performing the method (100; 200; 300) according to any one of claims 1 - 12, when the computer program is executed on a computer, a processor, or a programmable hardware component.
